# DEMANDE DE BREVET EUROPEEN

(11) **EP 1 155 662 A1**
(43) Date de publication de la demande: **21.11.2001**
(21) Numéro de dépôt: 01401159.7
(22) Date de dépôt: 04.05.2001
(51) Int. Cl.: A61C 8/00

(54) **Analogue de laboratoire pour prothèse dentaire**

(30) Priorité: 17.05.2000 FR 0006290
(71) Demandeur: Yeung, Jean-Claude, 94220 Charenton Le Pont (FR)
(72) Inventeur: Yeung, Jean-Claude, 94220 Charenton Le Pont (FR)
(74) Mandataire: CABINET BONNET-THIRION

(57) **Abrégé**

La présente invention concerne un analogue de laboratoire (100) destiné à accueillir par vissage un pilier d'un ensemble prothétique dentaire, en vue d'être travaillé.

Selon l'invention, il comprend au moins deux parties (110, 130) enfilées l'une dans l'autre, dont une partie supérieure présentant une extrémité supérieure (112) reproduisant la partie supérieure de connexion d'un implant, et une partie inférieure, l'une des deux parties logeant un taraudage (122) pour le vissage dudit pilier, et l'autre partie comprenant des moyens anti-rotatifs (132) aptes à coopérer, par complémentarité de formes, avec une vis de pilier ou une partie filetée du pilier vissée dans ledit taraudage, pour la bloquer en rotation.

## Description

La présente invention concerne de manière générale les prothèses dentaires, et plus particulièrement un analogue de laboratoire destiné à accueillir par vissage un pilier d'un ensemble prothétique dentaire, en vue d'être travaillé par un chirurgien dentiste ou un prothésiste de laboratoire pour adapter sa forme à celle de la couronne ou du bridge qu'il est destiné à recevoir.

L'invention concerne également un ensemble dentaire comprenant un analogue et une vis de pilier ou une partie filetée d'un pilier spécialement adaptée pour coopérer avec cet analogue.

Les analogues actuellement connus sont réalisés en une seule pièce comprenant un corps globalement cylindrique de révolution, percé d'un alésage ouvert à une extrémité supérieure pour l'introduction d'une vis de pilier ou d'une partie filetée d'un pilier. A cet effet, l'alésage est pourvu, au niveau de son ouverture, d'un taraudage destiné à coopérer avec le filetage de la vis de pilier ou de la partie filetée de pilier. En outre, l'alésage est fermé à son autre extrémité.

Un tel analogue de type connu comprend une extrémité supérieure reproduisant la forme d'une partie de connexion supérieure d'un implant implanté dans l'os maxillaire d'un patient.

Avant d'utiliser cet analogue pour supporter un pilier destiné à être travaillé en laboratoire, il faut le figer dans du plâtre de laboratoire dans une position telle que son extrémité supérieure présente une orientation identique à celle de la partie de connexion supérieure de l'implant en bouche. Ceci est nécessaire pour que le pilier soit travaillé dans une position angulaire ou une orientation identique à celle qu'il aura lorsqu'il sera fixé sur l'implant implanté en bouche.

Cette opération de positionnement angulaire ou d'orientation de l'extrémité supérieure de l'analogue est réalisée au moyen d'une pièce appelée "transfert". Le transfert est placé sur l'implant implanté et fixé par l'intermédiaire d'une vis de serrage serrée dans l'implant, de sorte qu'il présente une certaine position angulaire. Cette position angulaire est figée au moyen d'une pâte à empreinte ou autre matériau connu emprisonnant ladite vis serrée et le transfert associé. Puis, l'ensemble constitué par la vis de serrage et le transfert solidarisés l'un à l'autre est dévissé de l'implant pour être vissé de nouveau dans l'analogue afin de fixer la position angulaire de son extrémité supérieure durant sa prise dans du plâtre de laboratoire ou autre matériau connu.

Après avoir figé l'analogue dans du plâtre de laboratoire, le pilier est vissé sur celui-ci jusqu'à l'arrêt de la vis de pilier ou de la tige filetée portée par ledit pilier, et est travaillé à la fraise.

L'opération de fraisage du pilier provoque des vibrations qui sont transmises à la vis de pilier ou à la tige filetée de pilier, ce qui peut entraîner le dévissage dudit pilier durant son travail.

Pour remédier à cet inconvénient, la présente invention propose un nouveau analogue de laboratoire destiné à accueillir par vissage un pilier d'un ensemble prothétique dentaire, en vue d'être travaillé, caractérisé en ce qu'il comprend au moins deux parties enfilées l'une dans l'autre, dont une partie supérieure présentant une extrémité supérieure reproduisant la partie supérieure de connexion d'un implant implanté dans l'os maxillaire d'un patient, et une partie inférieure, l'une des deux parties logeant un taraudage pour le vissage dudit pilier, et l'autre partie comprenant des moyens anti-rotatifs aptes à coopérer, par complémentarité de formes, avec une vis de pilier ou une partie filetée du pilier vissée dans ledit taraudage, pour la bloquer en rotation.

Avantageusement, selon l'invention, lesdits moyens anti-rotatifs coopèrent avec une extrémité de vis de pilier ou de partie filetée de pilier, selon une coopération mâle - femelle.

Selon un mode de réalisation préférentiel de l'analogue conforme à l'invention, ledit taraudage est logé dans ladite partie supérieure et lesdits moyens anti-rotatifs sont prévus à l'extrémité supérieure de ladite partie inférieure.

Selon ce mode de réalisation préférentiel, lesdits moyens anti-rotatifs peuvent comprendre un logement destiné à recevoir l'extrémité de la vis de pilier ou de la partie filetée du pilier. Ils peuvent comprendre également une saillie axiale apte à s'engager dans un logement de forme complémentaire prévu à l'extrémité de la vis de pilier ou de la partie filetée du pilier.

En outre, selon ce mode de réalisation préférentiel de l'analogue conforme à l'invention, il comporte une partie intermédiaire destinée à être interposée entre les parties supérieure et inférieure, cette partie intermédiaire étant pourvue, à son extrémité supérieure, d'un taraudage pour le vissage dudit pilier, et étant apte à prendre différentes positions angulaires autour de l'axe X de l'analogue par rapport à ladite partie supérieure, avant d'être figée dans du plâtre de laboratoire.

Ainsi, grâce à cette partie intermédiaire on peut positionner la tête de la vis de pilier sur l'analogue dans une position angulaire identique à celle qu'elle a sur l'implant. Cela est particulièrement avantageux pour le cas où la tête de la vis de pilier est prévue pour faire saillie de la gencive du patient en formant avec le pilier, par complémentarité de formes, un volume unique destiné à recevoir la couronne ou le bridge, et, de ce fait, doit être travaillée en laboratoire tout comme le pilier.

Cette partie intermédiaire porte, avantageusement, sur une surface externe des moyens de blocage en translation axiale et en rotation lorsque celle-ci est figée dans du plâtre de laboratoire. Ces moyens de blocage peuvent comprendre des ailettes régulièrement réparties sur le pourtour de ladite surface externe.

Selon une variante de réalisation de l'analogue conforme à l'invention, ledit taraudage est prévu à l'extrémité supérieure de ladite partie inférieure, et lesdits moyens anti-rotatifs sont logés dans ladite partie supérieure.

Dans ce cas, avantageusement, il peut également comporter une partie intermédiaire destinée à être interposée entre les parties supérieure et inférieure, cette partie intermédiaire étant pourvue à son extrémité supérieure desdits moyens anti-rotatifs, et étant apte à prendre différentes positions angulaires autour de l'axe X de l'analogue par rapport à ladite partie supérieure, avant d'être figée dans du plâtre de laboratoire.

Cette partie intermédiaire porte également, avantageusement, sur une surface externe des moyens de blocage en translation axiale et en rotation lorsque celle-ci est figée dans du plâtre de laboratoire. Ces moyens de blocage peuvent comprendre des ailettes régulièrement réparties sur le pourtour de ladite surface externe.

Avantageusement, selon l'invention, ladite partie inférieure comporte à son extrémité inférieure un logement pour l'introduction d'un outil de manoeuvre en vue du démontage de cette partie de l'analogue.

Selon une autre caractéristique de l'analogue conforme à l'invention, lesdites parties supérieure et inférieure portent, sur une surface externe, des moyens pour bloquer lesdites parties en translation axiale et en rotation lorsque celles-ci sont figées dans du plâtre de laboratoire.

Lesdits moyens de blocage en translation axiale et en rotation peuvent être des ailettes régulièrement réparties sur le pourtour de chaque surface externe.

Enfin, l'invention concerne également un ensemble dentaire comprenant un analogue de laboratoire tel que précité et une vis de pilier ou une partie filetée d'un pilier comportant une partie anti-rotative dans les deux sens de rotation apte à coopérer, par complémentarité de formes, avec les moyens anti-rotatifs dudit analogue.

La partie anti-rotative de la vis de pilier peut être une fente, ou un logement hexagonal ou un logement cruciforme.

Cette partie anti-rotative peut être également une surface hexagonale située à l'extrémité de la vis ou sur le fût de la vis entre la tête de vis et son extrémité filetée.

La description qui va suivre en regard des dessins annexés, donnés à titre d'exemples non limitatifs, fera bien comprendre en quoi consiste l'invention et comment elle peut être réalisée.

Sur les dessins annexés :
- les figures 1a à 1c sont des vues en perspective de côté des trois parties d'un mode de réalisation préférentiel de l'analogue selon l'invention ;
- la figure 2 est une vue en coupe axiale de l'analogue dont les différentes parties sont représentées sur les figures 1a à 1c ;
- la figure 3 est une vue en perspective de côté d'une variante de réalisation de la première partie supérieure de l'analogue ;
- la figure 4 est une vue en perspective de côté d'une variante de réalisation de l'analogue ; et
- les figures 5a à 5c sont des vues de détail d'autres variantes de réalisation de l'extrémité supérieure de la troisième partie de l'analogue selon l'invention.

De façon préliminaire, on notera que, d'une figure à l'autre, les éléments identiques ou similaires des différents modes de réalisation seront dans la mesure du possible référencés par les mêmes signes de référence et ne seront pas décrits à chaque fois.

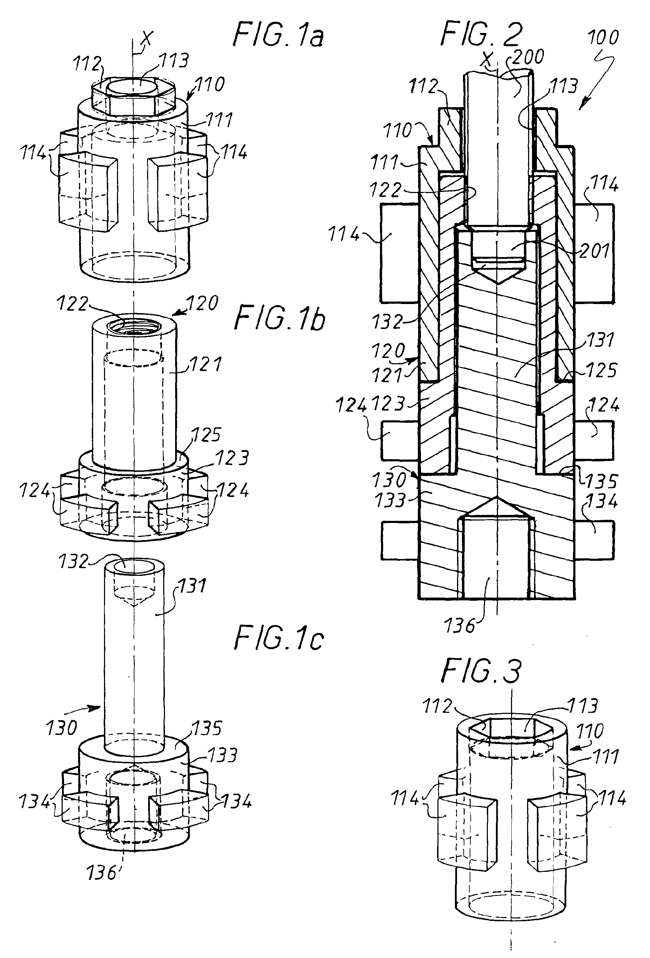

Sur les figures 1a, 1b, 1c et 2 on a représenté un mode de réalisation préférentiel d'un analogue de laboratoire 100 destiné à accueillir par vissage un pilier (non représenté) d'un ensemble prothétique dentaire, en vue d'être travaillé notamment par fraisage.

Cet analogue de laboratoire 100 comprend trois parties 110, 120, 130 enfilées l'une dans l'autre selon l'axe X de l'analogue.

La première partie supérieure 110, représentée plus particulièrement sur la figure 1a, comprend un corps 111 globalement cylindrique de révolution autour de l'axe X, percé d'un alésage axial traversant 113 à paroi lisse, et présentant une extrémité supérieure 112 reproduisant la partie supérieure de connexion d'un implant implanté dans l'os maxillaire d'un patient.

Ici, l'extrémité supérieure 112 présente la forme d'un hexagone externe, mais elle peut présenter toute autre forme telle qu'un hexagone interne comme cela est représenté sur la figure 3, ou encore un octogone externe ou interne, ou encore une configuration cylindriquè avec des rainures externes ou internes.

Cette partie supérieure 110 porte, sur la surface externe cylindrique de son corps 111, des moyens pour la bloquer en translation axiale et en rotation lorsque celle-ci est figée dans du plâtre de laboratoire.

Ici, ces moyens de blocage comprennent des ailettes 114 régulièrement réparties sur le pourtour de la surface externe de son corps 111.

La deuxième partie de l'analogue de laboratoire 100, représentée plus particulièrement sur la figure 1b, est une partie intermédiaire 120 présentant un corps 121 cylindrique de révolution autour de l'axe X, destiné à être enfilé dans l'alésage traversant 113 de la première partie supérieure 110 (voir figure 2).

Cette partie intermédiaire 120 est traversée par un alésage s'étendant selon l'axe X. Le corps 121 de cette partie intermédiaire 120 est pourvu, à son extrémité supérieure, d'un taraudage 122 pour le vissage dudit pilier. Ainsi, lorsque le corps 121 de la partie intermédiaire 120 est engagé dans la partie supérieure 110, cette dernière loge ledit taraudage 122 pour le vissage du pilier sur l'analogue.

En effet, comme le montre plus particulièrement la figure 2, le taraudage 122 est destiné à accueillir le filetage d'une vis de pilier 200 traversant l'alésage 113 de la partie supérieure 110 de l'analogue.

Avantageusement, une fois que la vis de pilier 200 est vissée dans la partie intermédiaire 120 de l'analogue, cette dernière est apte à prendre différentes positions angulaires autour de l'axe X de l'analogue par rapport à ladite partie supérieure 110, avant d'être figée dans du plâtre de laboratoire.

Ainsi, grâce à cette partie intermédiaire 120, on peut positionner la vis de pilier 200 par rapport à la partie supérieure 110 de l'analogue dans une position angulaire identique à celle qu'elle a lorsqu'elle est vissée dans l'implant implanté en bouche.

Cela est particulièrement avantageux dans le cas où la tête de la vis de pilier est prévue pour faire saillie de la gencive du patient en formant avec le pilier, par complémentarité de formes, un volume unique destiné à recevoir la couronne ou le bridge, et, de ce fait, doit être travaillée en laboratoire tout comme le pilier.

En effet, tout comme le pilier, la tête de la vis de pilier doit alors présenter la même position angulaire que celle qu'elle aura lorsqu'elle sera vissée dans l'implant, pour être travaillée en laboratoire.

En partie inférieure, le corps 121 de cette partie intermédiaire 120 présente un élargissement 123 formant un rebord annulaire 125 destiné à supporter l'extrémité inférieure du corps 111 de la partie supérieure 110 de l'analogue (voir figure 2).

Tout comme la partie supérieure 110 de l'analogue, cette partie intermédiaire 120 comporte, sur la surface externe cylindrique de l'élargissement 123 de son corps 121, des moyens de blocage en translation axiale et en rotation lorsque celle-ci est figée dans du plâtre de laboratoire.

Ces moyens de blocage comprennent ici des ailettes 124 régulièrement réparties sur le pourtour de ladite surface externe.

La troisième partie de l'analogue, représentée plus particulièrement sur la figure 1c, est une partie inférieure 130 comportant un corps cylindrique de révolution 131 autour de l'axe X, destiné à être engagé dans la partie intermédiaire 120 (voir figure 2), de sorte que son extrémité supérieure vient se déplacer en dessous et dans le prolongement du taraudage 122 de la partie intermédiaire 120 enfilée dans la partie supérieure 110.

Cette extrémité supérieure du corps 131 de la partie inférieure 130 est pourvue de moyens anti-rotatifs 132 aptes à coopérer, par complémentarité de formes (selon une coopération mâle - femelle), avec une extrémité 201 de la vis de pilier 200 (voir figure 2) ou d'une partie filetée du pilier vissée dans le taraudage 122 de la partie intermédiaire 120.

Selon le mode de réalisation représenté sur les figures 1a à 1c et 2, lesdits moyens anti-rotatifs comprennent un logement 132 destiné à recevoir l'extrémité 201 de la vis de pilier ou de la partie filetée du pilier, ce logement 132 présentant une forme complémentaire de cette extrémité 201 de la vis de pilier 200 ou de la partie filetée de pilier pour la bloquer en rotation.

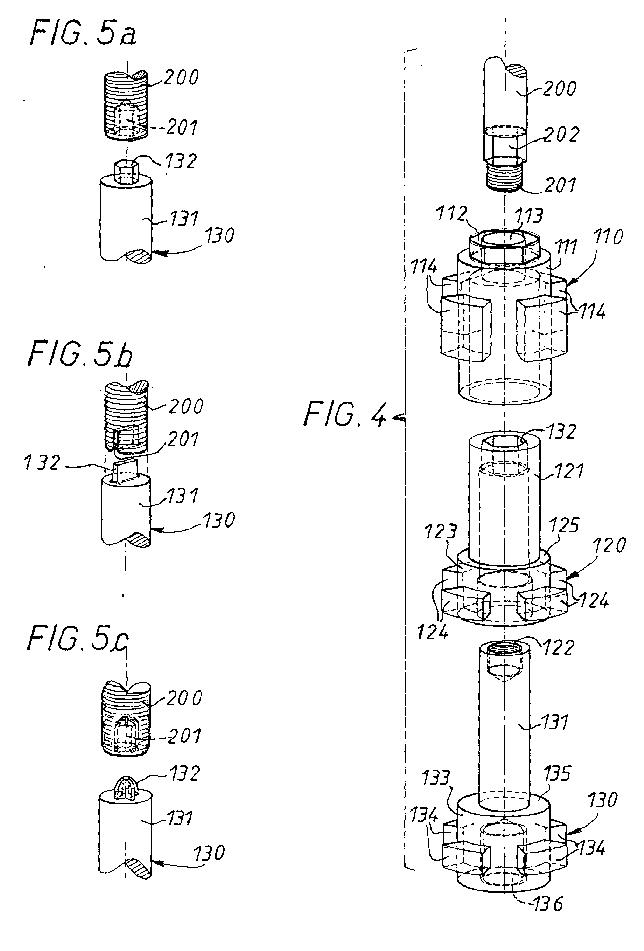

Bien entendu, selon d'autres variantes de réalisation représentées sur les figures 5a, 5b et 5c, on peut prévoir que les moyens anti-rotatifs, prévus à l'extrémité supérieure de la partie inférieure 130, comprennent une saillie axiale 132 s'étendant à partir du corps 131 de ladite partie inférieure 130, cette saillie axiale 132 étant destinée à s'engager dans un logement de forme complémentaire prévu à l'extrémité 201 de la vis de pilier 200 ou de la partie filetée du pilier.

Ladite saillie axiale 132 peut prendre différentes formes telles qu'une forme hexagonale s'engageant dans un logement hexagonal (voir figure 5a), une forme rectangulaire s'engageant dans une fente (voir figure 5b) ou une forme en croix ou en étoile s'engageant dans un logement cruciforme (voir figure 5c).

Grâce à ce blocage en rotation, la vis de pilier 200 ou la partie filetée de pilier vissée dans l'analogue n'a pas tendance à se dévisser lors du fraisage du pilier et/ou de la tête de vis.

Par ailleurs, comme le montre la figure 1c, le corps 131 de la partie inférieure 130 présente en partie inférieure un élargissement 133 formant un rebord annulaire 135 supportant le bord inférieur de la partie intermédiaire 120.

Ladite partie inférieure 130 comporte, à son extrémité inférieure, un logement 136 pour l'introduction d'un outil de manoeuvre en vue du démontage de cette partie de l'analogue.

En outre, sur la surface externe de l'élargissement 133 du corps 131 de la partie inférieure 130, il est prévu des moyens pour la bloquer en translation axiale et en rotation lorsqu'elle est figée dans du plâtre de laboratoire. Ces moyens de blocage en translation axiale et en rotation sont ici constitués par des ailettes 134 régulièrement réparties sur le pourtour de cette surface externe.

Les trois parties 110, 120, 130 de l'analogue de laboratoire 100 peuvent être réalisées avantageusement en laiton, en acier ou encore en titane.

Nous allons maintenant décrire ci-après brièvement l'utilisation de l'analogue de laboratoire 100 représenté sur les figures 1a à 1c et 2.

Dans une première étape, la partie supérieure 110 de l'analogue de laboratoire 100 est figée dans du plâtre dans une position telle que son extrémité supérieure 112 reproduisant la partie supérieure de connexion d'un implant implanté dans l'os maxillaire d'un patient soit transférée. Cela signifie que la position angulaire de cette extrémité supérieure 112 est identique à celle de l'extrémité supérieure de connexion de l'implant implanté en bouche.

Puis, la partie intermédiaire 120 de l'analogue est enfilée dans la partie supérieure 110 et le pilier est vissé dans le taraudage 122 de cette partie intermédiaire 120 jusqu'à l'arrêt de la vis.

Ensuite, en faisant pivoter cette partie intermédiaire 120 autour de l'axe X, on peut ajuster la position angulaire de la tête de la vis par rapport à l'extrémité supérieure 112 de la partie supérieure 110 de l'analogue, de façon à ce qu'elle soit positionnée dans une position angulaire identique à celle qu'elle a lorsque la vis de pilier est vissée dans l'implant implanté en bouche.

Puis, on fige la partie intermédiaire dans du plâtre de laboratoire et on enfile dans celle-ci la partie inférieure 130 de l'analogue, de façon à ce que l'extrémité 201 de la vis de pilier 200 s'engage dans le logement 132 prévu à l'extrémité supérieure de cette partie inférieure 130 pour être bloquée en rotation.

Cette partie inférieure 130 est alors figée dans du plâtre. Le pilier peut alors être travaillé par fraisage sans risque d'être dévissé au cours de ce fraisage.

Pour le démontage de la partie inférieure de l'analogue, on retire le plâtre figé autour des ailettes de celle-ci et on introduit un outil de démontage dans le logement 136 prévu à l'extrémité inférieure de ladite partie inférieure 130 de l'analogue, pour désolidariser celle-ci de l'extrémité 201 de la vis de pilier 200 et dévisser ladite vis de pilier 200 de l'analogue.

La présente invention n'est nullement limitée au mode de réalisation décrit et représenté mais l'homme du métier saura y apporter toute variante conforme à son esprit.

Par exemple, on pourra prévoir, comme le montre plus particulièrement la figure 4, que le taraudage 122 dans lequel est vissé le pilier soit prévu à l'extrémité supérieure de la partie inférieure 130 de l'analogue, et que lesdits moyens anti-rotatifs 132 soient logés dans ladite partie supérieure 110.

En particulier, c'est la partie intermédiaire 120 de l'analogue qui est pourvue à son extrémité supérieure desdits moyens anti-rotatifs constitués ici par un logement 132 de forme hexagonale apte à coopérer avec une partie hexagonale 202 de la vis de pilier 200, située sur le fût de la vis entre la tête de vis et son extrémité filetée 201.

## Revendications

1. Analogue de laboratoire (100) destiné à accueillir par vissage un pilier d'un ensemble prothétique dentaire, en vue d'être travaillé, **caractérisé en ce qu'**il comprend au moins deux parties (110, 130) enfilées l'une dans l'autre, dont une partie supérieure (110) présentant une extrémité supérieure (112) reproduisant la partie supérieure de connexion d'un implant implanté dans l'os maxillaire d'un patient, et une partie inférieure (130), l'une des deux parties logeant un taraudage (122) pour le vissage dudit pilier, et l'autre partie comprenant des moyens anti-rotatifs (132) aptes à coopérer, par complémentarité de formes, avec une vis de pilier ou une partie filetée du pilier vissée dans ledit taraudage (122), pour la bloquer en rotation.

2. Analogue (100) selon la revendication 1, **caractérisé en ce que** lesdits moyens anti-rotatifs coopèrent avec une extrémité de vis de pilier ou de partie filetée de pilier, selon une coopération mâle - femelle.

3. Analogue (100) selon l'une des revendications 1 ou 2, **caractérisé en ce que** ledit taraudage (122) est logé dans ladite partie supérieure (110) et lesdits moyens anti-rotatifs (132) sont prévus à l'extrémité supérieure de ladite partie inférieure (130).

4. Analogue (100) selon la revendication 3, **caractérisé en ce que** lesdits moyens anti-rotatifs comprennent un logement (132) destiné à recevoir l'extrémité (201) de la vis de pilier ou de la partie filetée du pilier.

5. Analogue (100) selon la revendication 3, **caractérisé en ce que** lesdits moyens anti-rotatifs comprennent une saillie axiale (132) destinée à s'engager dans un logement de forme complémentaire prévu à l'extrémité (201) de la vis de pilier (200) ou de la partie filetée du pilier.

6. Analogue (100) selon l'une des revendications précédentes, **caractérisé en ce qu'**il comporte une partie intermédiaire (120) destinée à être interposée entre les parties supérieure (110) et inférieure (130), cette partie intermédiaire (120) étant pourvue, à son extrémité supérieure, d'un taraudage (122) pour le vissage dudit pilier, et étant apte à prendre différentes positions angulaires autour de l'axe X de l'analogue par rapport à ladite partie supérieure (110), avant d'être figée dans du plâtre de laboratoire.

7. Analogue (100) selon la revendication 6, **caractérisé en ce que** ladite partie intermédiaire (120) porte, sur une surface externe, des moyens de blocage en translation axiale et en rotation lorsque celle-ci est figée dans du plâtre de laboratoire.

8. Analogue (100) selon la revendication 7, **caractérisé en ce que** lesdits moyens de blocage comprennent des ailettes (124) régulièrement réparties sur le pourtour de ladite surface externe.

9. Analogue (100) selon la revendication 1, **caractérisé en ce que** ledit taraudage (122) est prévu à l'extrémité supérieure de ladite partie inférieure (130), et lesdits moyens anti-rotatifs sont logés dans ladite partie supérieure (110).

10. Analogue (100) selon la revendication 8, **caractérisé en ce qu'**il comporte une partie intermédiaire (120) destinée à être interposée entre les parties supérieure (110) et inférieure (130), cette partie intermédiaire (120) étant pourvue à son extrémité supérieure desdits moyens anti-rotatifs (132), et étant apte à prendre différentes positions angulaires autour de l'axe X de l'analogue par rapport à ladite partie supérieure (110), avant d'être figée dans du plâtre de laboratoire.

11. Analogue (100) selon la revendication 10, **caractérisé en ce que** ladite partie intermédiaire (120) porte, sur une surface externe, des moyens de blocage en translation axiale et en rotation lorsque celle-ci est figée dans du plâtre de laboratoire.

12. Analogue (100) selon la revendication 11, **caractérisé en ce que** lesdits moyens de blocage comprennent des ailettes (124) régulièrement réparties sur le pourtour de ladite surface externe.

13. Analogue (100) selon l'une des revendications précédentes, **caractérisé en ce que** ladite partie inférieure (130) comporte, à son extrémité inférieure, un logement (136) pour l'introduction d'un outil de manoeuvre en vue du démontage de ladite partie inférieure (130) de l'analogue.

14. Analogue (100) selon l'une des revendications précédentes, **caractérisé en ce que** lesdites parties supérieure (110) et inférieure (130) portent, sur une surface externe, des moyens pour bloquer lesdites parties en translation axiale et en rotation lorsque celles-ci sont figées dans du plâtre de laboratoire.

15. Analogue (100) selon la revendication 14, **caractérisé en ce que** lesdits moyens de blocage en translation axiale et en rotation sont des ailettes (114, 134) régulièrement réparties sur le pourtour de chaque surface externe.

16. Ensemble dentaire comprenant un analogue de laboratoire (100) selon l'une quelconque des revendications 1 à 15, et une vis de pilier (200) ou une partie filetée d'un pilier comportant une partie anti-rotative dans les deux sens (201, 202) apte à coopérer, par complémentarité de formes, avec les moyens anti-rotatifs (132) dudit analogue.

17. Ensemble selon la revendication 16, **caractérisé en ce que** la partie anti-rotative (201) de la vis de pilier (200) est une fente, ou un logement hexagonal ou un logement cruciforme.

18. Ensemble selon la revendication 16, **caractérisé en ce que** la partie anti-rotative (202) de la vis de pilier (200) est une surface hexagonale située à l'extrémité de la vis ou sur le fût de la vis entre la tête de vis et son extrémité filetée.
